# EUROPÄISCHE PATENTSCHRIFT

(11) **EP 0 388 805 B1**
(45) Veröffentlichungstag und Bekanntmachung des Hinweises auf die Patenterteilung: **16.08.1995**
(21) Anmeldenummer: 90104968.4
(22) Anmeldetag: 16.03.1990
(51) Int. Cl.: B60L 5/28

(54) **Vorrichtung zur Schnellabsenkung von Stromabnehmern elektrisch angetriebener Fahrzeuge mit pneumatischem Antrieb**
Device for quick retraction of current collectors with pneumatic actuation for electrically propelled vehicles
Dispositif de descente rapide de prises de courant à commande pneumatique pour véhicules à propulsion électrique

(30) Priorität: 20.03.1989 DE 3909095
(43) Veröffentlichungstag der Anmeldung: 26.09.1990
(73) Patentinhaber: DOZLER GMBH, D-85511 Ottobrunn (DE)
(72) Erfinder: Lengfelder, Edmund, Prof. Dr., D-8000 München 82 (DE)
(74) Vertreter: Heusler, Wolfgang, Dipl.-Ing.

(56) Entgegenhaltungen:
- EP-A- 0 042 334
- CH-A- 320 647
- DE-B- 1 255 702

## Beschreibung

Die Erfindung betrifft eine Vorrichtung zur Schnellabsenkung von Stromabnehmern elektrisch angetriebener Fahrzeuge, gemäß dem Oberbegriff des Anspruchs 1.

Bei elektrisch angetriebenen Fahrzeugen werden pneumatische Antriebe zum Anheben und Absenken des Stromabnehmers sowie zur Erzeugung der Anpreßkraft an den Fahrdraht verwendet. Bei Störungen im Bereich des Fahrdrahtsystems bzw. des Stromabnehmers ist es erforderlich, den Stromabnehmer möglichst rasch abzusenken. Dies kann z.B. dadurch geschehen, daß die Druckversorgung unterbrochen und der pneumatische Antrieb (z. B. Druckluft-Zylinder, Faltenbalg, Rollmembran-Zylinder), im folgenden Zylinder genannt, über seinen Druckanschluß entlüftet wird. Dieser Vorgang nimmt eine gewisse Zeit in Anspruch, währenddessen sich der Stromabnehmer weiterhin am Fahrdraht befindet.

Eine Vorrichtung zur Schnellabsenkung von Stromabnehmern elektrisch angetriebener Fahrzeuge, bei denen die Anpreßkraft an den Fahrdraht durch einen pneumatischen Antrieb mit einem Zylinder erzeugt und die Schnellabsenkung durch Druckabbau im Zylinder vermittels eines Ventils bewerkstelligt wird, welches mit dem Zylinder über eine pneumatische Leitung verbunden ist und ein Verschlußelement hat, ist aus der DE-B-1 255 702 bekannt. Das Steuerventil dieser bekannten Vorrichtung besteht aus einer Doppelzylindereinheit mit zwei parallel zueinander verschiebbaren Steuerkolben, die mechanisch mit dem Kolben des Antriebszylinders des Stromabnehmers bzw. mit dem Stromabnehmer selbst verbunden sind. Der Antriebszylinder ist über eine Druckleitung an einen Druckluftanschluß des Steuerventils angeschlossen. Zum Absenken des Stromabnehmers wird die Druckluftquelle abgeschaltet und der Druckluftanschluß mit der Außenluft verbunden, worauf der Druck aus dem Antriebszylinder unter Mitwirkung einer sich entspannenden Senkfeder und der beiden Steuerventilkolben durch die erwähnte Druckleitung und verschiedene Öffnungen der Steuerventile ins Freie entweicht.

Auch bei einer aus der EP-A-0 042 334 bekannten Vorrichtung wird die Anpreßkraft eines Stromabnehmers von einem Antriebszylinder erzeugt, der über einen als Ventil wirkenden Steuerzylinder an eine Druckluftquelle angeschlossen ist. Im Falle einer Störung wird der Kolben des Steuerzylinders so verschoben, daß er den Eingang des Antriebszylinders mit einer ins Freie führenden Entlüftungsöffnung verbindet und die Verbindung mit der Druckluftquelle versperrt, so daß der Stromabnehmer aufgrund seines Eigengewichts absinken kann.

Es ist Aufgabe der Erfindung, bei einer gattungsgemäßen Vorrichtung den Druckabbau im Zylinder schlagartig herbeizuführen und dadurch die Absenkzeit des Stromabnehmers auf ein Minimum zu verkürzen.

Der schlagartige Druckabbau im Zylinder wird erfindungsgemäß durch die Merkmale des Anspruchs 1 erreicht. Die Größe des erforderlichen effektiven Ventilquerschnitts richtet sich im wesentlichen nach dem Volumen des Zylinders, dem Druck im Zylinder und der geforderten Druckabbauzeit. Mit der vorliegenden Erfindung wird der erforderliche Druckabbau in Bruchteilen einer Sekunde erreicht. Dadurch wird ebenfalls in Bruchteilen einer Sekunde die Schnellabsenkung durchgeführt und der Stromabnehmer vom Fahrdraht entfernt. Besondere Ausführungsorten sind in den abhängigen Ansprüchen offenbart.

Die bei Stromabnehmern verwendeten pneumatischen Antriebe haben in der Regel Volumina von mehreren Litern. Deshalb muß das Ventil, das den schlagartigen Druckabbau herbeiführt, neben einem großen Öffnungsquerschnitt auch einen relativ kurzen Öffnungsweg des Verschlußelements aufweisen. Als Verschlußelement eignet sich z.B. eine Membranfläche, eine Kolbenfläche etc., die durch Federwirkung gegen den Druck im Zylinder dicht auf den Ventilsitz gedrückt wird. Bei einem großen Ventilsitzdurchmesser genügt daher ein kleiner Öffnungsweg, um einen großen Öffnungsquerschnitt zu erreichen. Bei gegebenem Ventilsitzdurchmesser D ist bereits nach einem Öffnungsweg des Verschluß elements von D/4 ein äquivalenter Öffnungsquerschnitt erreicht.

Nachfolgend sind Ausführungsbeispiele beschrieben und durch Zeichnungen erläutert. Es zeigen
Fig. 1 einen Zylinder mit angebautem Ventil großen Querschnitts, bei dem die Schließkraft auf das Verschlußelement durch eine Feder erzeugt wird,
Fig. 2 einen Zylinder mit angebautem Ventil großen Querschnitts, bei dem die Schließkraft auf das Verschlußelement durch Gasdruck in der Ventilkammer erzeugt wird.

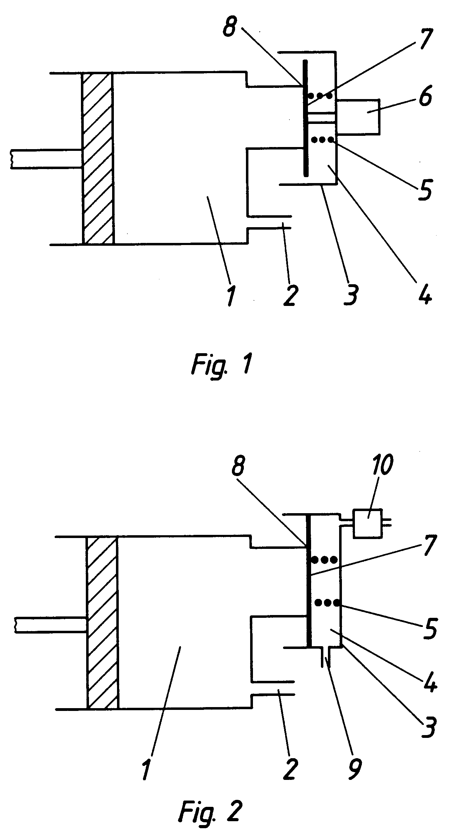

Ein Ausführungsbeispiel der Erfindung ist in Fig. 1. wiedergegeben. Die Kraft der Feder (z. B. mechanische Feder, Gasdruckfeder) (5), d. h. die auf das Verschlußelement (7) wirkende Schließkraft, ist etwas größer als die Kraft, die durch den Gasdruck im Innern des Zylinders (1) auf das Verschlußelement (7) ausgeübt wird. Wird der Zylinder (1) mit dem für den Fahrbetrieb notwendigen Nenndruck betrieben, so ist das Ventil geschlossen. Tritt eine Störung auf, welche die Schnellabsenkung des Stromabnehmers herbeiführen soll, so wird durch einen hierdruch ausgelösten Steuerbefehl die Betätigungseinheit (6) aktiviert, die das Verschlußelement (7) vom Ventilsitz (8) abhebt. Über den nun entstandenen großen Öffnungsquerschnitt erfolgt der schlagartige Druckabbau im Zylinder. Die Erfindung ermöglicht auch die gleichzeitige Verwendung des Zylinders als Dämpfungselement. Nach Auslösung der Schnellabsenkung wird der Stromabnehmer ja vom Fahrdraht weg nach unten beschleunigt. Wird diese nach unten gerichtete Bewegung des Stromabnehmers, insbesondere bei Schnellabsenkung aus großer Höhe, nicht nach einer gewissen Fallstrecke gedämpft, so wird der Stromabnehmer beim Erreichen der unteren Ruhelage auf dem Grundrahmen oder dem Fahrzeugdach aufschlagen und damit erhebliche Schäden herbeiführen. Durch die Erfindung wird dies vermieden.

Dies geschieht dadurch, daß die Betätigungseinheit (6) nur über kurze Zeit aktiviert bleibt. Durch die Feder (5) wird danach das Verschlußelement (7) wieder gegen den Ventilsitz (8) gedrückt. Dadurch ist der Innenraum des Zylinders (1) wieder abgeschlossen. Der sich im Vorgang der Schnellabsenkung nach unten bewegende Stromabnehmer bewirkt nun durch Verkleinerung des Zylinderinnenraumes einen Druckanstieg, der der weiteren Abwärtsbewegung des Stromabnehmers eine Kraft entgegensetzt und damit dämpfend wirkt. Überschreitet der bei diesem Vorgang entstehende Druckanstieg einen durch die Kraft der Feder (5) definierten Wert, so hebt das Verschlußelement (7) vom Ventilsitz (8) ab und verhindert damit einen weiteren Druckaufbau. Dieser Vorgang verhindert ein Zurückfedern des Stromabnehmers nach oben. Der die Schnellabsenkung auslösende Steuerbefehl wird erfindungsgemäß auch zur Unterbrechung der Arbeitsleitung (2) am Zylinder verwendet.

Eine andere Ausführungsform der Erfindung besteht darin, daß das Verschlußelement gegen das Ventilgehäuse abgedichtet ist und die Kraft, die erforderlich ist, um das Ventil im Normalbetrieb des Stromabnehmers geschlossen zu halten, durch Druck in der Ventilkammer erzeugt wird. Soll eine Schnellabsenkung des Stromabnehmers herbeigeführt werden, so wird der Druck in der Ventilkammer durch Betätigung eines Entlüftungsventils abgebaut. Dadurch überwiegt die durch den Zylinderdruck entstehende Kraft auf das Verschlußelement. Dies führt zum Öffnen und zum Druckabbau im Zylinder. Auch hier sind ein großer Ventilsitzdurchmesser und ein kleiner Öffnungsweg, d. h. eine kleine Öffnungszeit erfindungsgemäße Merkmale. Ein Ausführungsbeispiel ist in Fig. 2 dargestellt. Das Verschlußelement (7) ist gegen das Ventilgehäuse (3) abgedichtet. Bei Normalfunktion der pneumatischen Antriebseinheit (Heben und Senken des Stromabnehmers sowie Erzeugung des Anpreßdrucks an den Fahrdraht) wird über eine Arbeitsleitung (9) Druckgas in die Ventilkammer (4) eingeleitet. Die von der Seite der Ventilkammer auf das Verschlußelement (7) wirkende Kraft ist größer als die durch den Arbeitsdruck im Zylinder (1) gegen das Verschlußelement (7) wirkende Kraft.

Dieser Kraftunterschied wird erfindungsgemäß dadurch bewirkt, daß die für den Druck wirksame Fläche des Verschlußelements auf der Ventilkammerseite größer als auf der Zylinderseite des Verschlußelements ist. Der Kraftunterschied kann aber erfindungsgemäß auch durch die Verwendung einer zusätzlichen Federkaft (5) oder durch Verwendung eines im Vergleich zum Zylinderdruck höheren Ventilkammerdrucks oder durch Verwendung eines auf das Verschlußelement wirkenden Hebelsystems erreicht werden. Zweckmäßigerweise wird die Ventilkammer (4) mit dem gleichen Druck versorgt wie der Zylinder (1). Dies wird erfindungsgemäß über eine externe (9) oder interne Arbeitsleitung, d. h. eine pneumatisch wirksame Verbindung zwischen Ventilkammer und Zylinder, z. B. durch eine Verbindungsbohrung, erreicht. Durch einen Befehl zur Schnellabsenkung wird der in der Ventilkammer (4) befindliche Druck über ein Entlüftungsventil (10) abgebaut. Dadurch überwiegt die von der Zylinderseite auf das Verschlußelement wirkende Kraft, das Ventil öffnet sich und führt zum schlagartigen Druckabbau im Zylinder.

Auch mit dieser Ausführungsform der Erfindung ist es möglich, eine Dämpfungsfunktion zu bewerkstelligen, indem die Öffnungszeit des Entlüftungsventils und der Zustrom von Druckgas über die Arbeitsleitung der Ventilkammer (9) definiert geregelt werden.

## Patentansprüche

1. Vorrichtung zur Schnellabsenkung von Stromabnehmern elektrisch angetriebener Fahrzeuge, bei denen die Anpreßkraft an den Fahrdraht durch einen pneumatischen Antrieb mit einem Zylinder (1) erzeugt und die Schnellabsenkung durch schlagartigen Druckabbau im Zylinder (1) vermittels eines Ventils mit großem Öffnungsquerschnitt bewerkstelligt wird, welches in den Zylinder (1) integriert oder mit diesem über eine pneumatische Leitung mit großem Querschnitt verbunden ist und ein Verschlußelement (7) hat,
**dadurch gekennzeichnet,** daß das Verschlußelement (7) von einer auf seiner einen Seite wirkenden Schließkraft gegen den Arbeitsdruck im Zylinder (1) dicht auf einen Ventilsitz (8) gedrückt wird, wobei die Schließkraft größer ist als die durch den Arbeitsdruck im Zylinder (1) von der gegenüberliegenden Seite auf das Verschlußelement (7) wirkende Kraft, und daß zur Schnellabsenkung das Verschlußelement (7) vom Ventilsitz (8) abgehoben und dadurch der schlagartige Druckabbau im Zylinder (1) herbeigeführt wird.

2. Vorrichtung nach Anspruch 1, **dadurch gekennzeichnet,** daß das Verschlußelement (7) aus einer Membranfläche besteht.

3. Vorrichtung nach Anspruch 1, **dadurch gekennzeichnet,** daß das Verschlußelement (7) aus einer Kolbenfläche besteht.

4. Vorrichtung nach Anspruch 1, **dadurch gekennzeichnet,** daß durch einen Steuerbefehl zur Schnellabsenkung eine Betätigungseinheit (6) aktiviert wird, welche das Verschlußelement (7) gegen die Schließkraft vom Ventilsitz abhebt.

5. Vorrichtung nach einem der vorangehenden Ansprüche, **dadurch gekennzeichnet,** daß die Schließkraft durch eine Feder (5) erzeugt wird.

6. Vorrichtung nach Anspruch 1, **dadurch gekennzeichnet,** daß das Verschlußelement (7) gegen die Ventilkammer (4) abgedichtet ist und die Schließkraft durch Gasdruck in der Ventilkammer (4) erzeugt wird, daß durch einen Steuerbefehl zur Schnellabsenkung ein Entlüftungsventil (10) betätigt wird, welches den Ventilkammerdruck abbaut, und daß dadurch der Zylinderdruck das Verschlußelement (7) vom Ventilsitz (8) abhebt und der Zylinderdruck seinerseits abgebaut wird.

7. Vorrichtung nach Anspruch 6, **dadurch gekennzeichnet,** daß zur Erzeugung der Schließkraft die für den Druck wirksame Fläche des Verschlußelements (7) auf der Ventilkammerseite größer ausgebildet ist als auf der Zylinderseite oder eine zusätzliche Federkraft oder ein im Vergleich zum Zylinderdruck höherer Ventilkammerdruck oder ein auf das Verschlußelement (7) wirkendes Hebelsystem zur Kraftübertragung vorgesehen sind.

8. Vorrichtung nach einem der Ansprüche 1 bis 7, **dadurch gekennzeichnet,** daß durch die Kurzzeitigkeit eines Steuerbefehls zur Schnellabsenkung bereits während des Bewegungsablaufs der Schnellabsenkung des Stromabnehmers die Schließkraft durch Beendigung der Aktivierung einer Betätigungseinheit (6) oder durch Schließen eines Entlüftungsventils (10) wieder aufgebaut und auf das Verschlußelement (7) wirksam wird und das Ventil mit großem Öffnungsquerschnitt schließt, und daß durch die Kompression des im Zylinder verbliebenen Gases die Fallbewegung des Stromabnehmers gedämpft wird, wobei ein Überdruck im Zylinder, der die Schließkraft des Verschlußelements (7) überwindet, entweichen kann und eine kontrollierte Dämpfung in der Endphase der Schnellabsenkungsbewegung erreicht und ein nach oben gerichtetes Zurückfedern des Stromabnehmers vermieden wird.

9. Vorrichtung nach einem der vorangehenden Ansprüche, **dadurch gekennzeichnet,** daß mit einem Steuerbefehl zur Schnellabsenkung die Druckversorgung (2) des pneumatischen Antriebs des Stromabnehmers unterbrochen wird.

## Claims

1. Device for rapidly lowering current collectors of electrically propelled vehicles in which the pressure on the contact wire is produced by a pneumatic actuator with a cylinder (1) and the rapid lowering is effected by sudden pressure reduction in the cylinder (1) by means of a valve with a large opening cross-sectional area which is integrated into the cylinder (1) or is connected to it via a pneumatic conduit with a large cross-sectional area and has a sealing element (7), characterised in that the sealing element (7) is sealingly pressed against a valve seat (8) by a closing force acting on one of its sides against the working pressure in the cylinder (1), whereby the closing force is greater than the force acting on the opposite side of the sealing element (7) due to the working pressure in the cylinder (1) and that for the purpose of rapid lowering the sealing element (7) is lifted from the valve seat (8) and the sudden pressure reduction in the cylinder (1) is thereby brought about.

2. Device as claimed in claim 1, characterised in that the sealing element (7) comprises a membrane surface.

3. Device as claimed in claim 1, characterised in that the sealing element (7) comprises a piston surface.

4. Device as claimed in claim 1, characterised in that as a result of a rapid lowering control command an actuating unit (6) is activated which lifts the sealing element (7) from the valve seat against the closing force.

5. Device as claimed in one of the preceding claims, characterised in that the closing force is produced by a spring (5).

6. Device as claimed in claim 1, characterised in that the sealing element (7) is sealed with respect to the valve chamber (4) and the closing force is produced by gas pressure in the valve chamber (4), that as a result of a rapid lowering control command a venting valve (10) is actuated which reduces the valve chamber pressure and that the cylinder pressure thereby lifts the sealing element (7) from the valve seat (8) and the cylinder pressure is reduced.

7. Device as claimed in claim 6, characterised in that in order to produce the closing force the surface of the sealing element (7), which is operative for the pressure, is constructed to be larger on the valve chamber side than on the cylinder side or an additional spring force or a higher valve chamber pressure in comparison to the cylinder pressure or a lever system acting on the sealing element (7) for the transmission of force are provided.

8. Device as claimed in one of claims 1 to 7, characterised in that due to the short duration of a rapid lowering control command the closing force is increased again, during the rapid lowering movement of the current collector, by terminating the activation of an actuating element (6) or by closing a venting valve (10) and acts on the sealing element (7) and the valve with large opening cross-sectional area closes and that the falling movement of the current collector is damped by the compression of the gas remaining in the cylinder, whereby an overpressure in the cylinder, which overcomes the closing force of the sealing element (7), can dissipate and produces a controlled damping in the final phase of the rapid lowering movement and an upwardly directed springing back of the current collector is prevented.

9. Device as claimed in one of the preceding claims, characterised in that the pressure supply (2) to the pneumatic actuator of the current collector is interrupted with a rapid lowering control command.

## Revendications

1. Dispositif pour abaisser rapidement la prise de courant de véhicules à moteur électrique, dans le cas duquel la force d'application sur le conducteur aérien est produite par un dispositif pneumatique d'entraînement comportant un vérin (1) et dans le cas duquel la descente rapide est produite par un abaissement brutal de la pression dans le vérin (1) au moyen d'une soupape à grande section d'ouverture, qui fait partie intégrante du vérin (1), ou qui est reliée à celui-ci par une conduite pneumatique de grande section et qui possède un organe de fermeture (7),
caractérisé en ce que
l'organe de fermeture (7) est appuyé de façon étanche contre un siège de soupape (8) par une force de fermeture agissant sur une de ses faces, en s'opposant à la pression de travail existant dans le vérin (1), étant entendu que la forte de fermeture est plus grande que la force agissant sur l'organe de fermeture (7), depuis sa face opposée, sous l'effet de la pression de travail régnant dans le vérin (1), et en ce que, pour réaliser l'abaissement rapide, l'organe de fermeture (7) est soulevé du siège de soupape (8), provoquant ainsi une chute brutale de la pression dans le vérin (1).

2. Dispositif suivant la revendication 1, caractérisé en ce que l'organe de fermeture (7) est constitué par une surface de membrane.

3. Dispositif suivant la revendication 1, caractérisé en ce que l'organe de fermeture (7) est constitué par une surface de piston.

4. Dispositif suivant la revendication 1, caractérisé en ce que, par un ordre commandant l'abaissement rapide, on fait agir une unité d'actionnement (6), qui soulève l'organe de fermeture (7) du siège de soupape en s'opposant à la force de fermeture.

5. Dispositif suivant l'une quelconque des revendications précédentes, caractérisé en ce que la force de fermeture est exercée par un ressort (5).

6. Dispositif suivant la revendication 1, caractérisé en ce que l'organe de fermeture (7) est rendu étanche par rapport à la chambre de soupape (4) et la forte de fermeture est produite par une pression de gaz dans la chambre de soupape (4), en ce que, par un ordre commandant l'abaissement rapide, on actionne une soupape de mise à l'atmosphère (10), qui abaisse la pression de la chambre de soupape, et en ce que, de ce fait, la pression du vérin soulève l'organe de fermeture (7) du siège de soupape (8) et que, de son côté, la pression du vérin s'abaisse.

7. Dispositif suivant la revendication 6, caractérisé en ce que, pour produire la force de fermeture, la surface de l'organe de fermeture (7) agissant sur la pression, est réalisée plus grande du côté de la chambre de soupape que du côté vérin, ou qu'il est prévu une force supplémentaire de ressort, ou une pression de la chambre de soupape plus grande que la pression de travail, ou un système de transmission des forces par levier, agissant sur l'organe de fermeture (7).

8. Dispositif suivant l'une quelconque des revendications 1 à 7, caractérisé en ce que, par la brièveté d'un ordre commandant l'abaissement rapide, déjà pendant le mouvement de descente rapide de la prise de courant, la force de fermeture est rétablie de nouveau par l'arrêt de l'activation d'une unité d'actionnement (6), ou par fermeture d'une soupape de mise à l'atmosphère (10), et agit sur l'organe de fermeture (7) et ferme la soupape comportant une grande section d'ouverture, et en ce que, par la compression du gaz restant dans le vérin, le mouvement de chute de la prise de courant est amorti, tandis qu'une surpression dans le vérin et surmontant la force de fermeture de l'organe de fermeture (7), peut s'échapper et qu'un amortissement contrôlé est obtenu dans la phase finale du mouvement de descente rapide, et qu'un retour élastique de la prise de courant vers le haut est empêché.

9. Dispositif suivant l'une quelconque des revendications précédentes, caractérisé en ce qu'avec un ordre commandant la descente rapide, l'alimentation en pression (2) du dispositif pneumatique d'entraînement de la prise de courant est interrompue.
